# EUROPEAN PATENT SPECIFICATION

(11) **EP 1 491 307 B1**
(45) Date of publication and mention of the grant of the patent: **09.06.2010**
(21) Application number: 03705048.1
(22) Date of filing: 05.02.2003
(51) Int. Cl.: B28B 11/00, C04B 35/64

(54) **METHOD OF DRYING HONEYCOMB FORMED BODY**
VERFAHREN ZUM TROCKNEN EINES WABENFÖRMIGEN KÖRPERS
PROCEDE DE SECHAGE D'UN CORPS FORME EN NID D'ABEILLE

(30) Priority: 28.03.2002 JP 2002091575
(43) Date of publication of application: 29.12.2004
(73) Proprietor: NGK Insulators, Ltd., Nagoya-shi, Aichi 467-8530 (JP)
(72) Inventor: NATE, Masayuki, Nagoya-shi, Aichi 467-8530 (JP); OSAMURA, Makoto, Nagoya-shi, Aichi 467-8530 (JP); KANEKO, Takahisa, Nagoya-shi, Aichi 467-8530 (JP); WADA, Yukihisa, Nagoya-shi, Aichi 467-8530 (JP)
(74) Representative: Paget, Hugh Charles Edward
(86) International application number: PCT/JP2003/001159
(87) International publication number: WO 2003/082540

(56) References cited:
- JP-A- 3 079 305
- JP-A- 3 122 058
- JP-A- 4 021 572
- JP-A- 4 031 372
- JP-A- 4 067 907
- JP-A- 6 158 109
- JP-A- 61 205 673
- JP-A- 63 074 970
- JP-A- 2001 019 533
- JP-A- 2001 019 560
- JP-A- 2001 130 973
- JP-A- 2002 020 173

## Description

### TECHNICAL FIELD

The present invention relates to a method of drying a honeycomb formed body. Particularly, the present invention relates to a method of drying a honeycomb formed body according to the preamble of claim 1 in which distortion or cross sectional deformation of a honeycomb formed body can be reduced.

### BACKGROUND ART

A honeycomb structure is widely used for catalyst carriers and various filters. Recently, The honeycomb structure gets attention as a filter for trapping particulate matter exhausted from diesel engine (hereinafter referred to as DPF).

Such a honeycomb structure generally contains ceramics as a main component in many cases. Following method is generally taken for producing the honeycomb structure. After adding water and several kinds of additives to the ceramic raw material to form kneaded clay, the kneaded clay is extruded to form honeycomb formed body, then the formed body is dried and fired to obtain the honeycomb structure.

Such a drying process in the production method is faced with the problem that deformation such as distortion or twist occurs in the honeycomb formed body. Sometimes the honeycomb formed body is formed by joining a plurality of segments having honeycomb structure into an integral body. This approach is also faced with the problem that any deformation such as distortion or twisting occurring in any segment may complicate the joining process.

As a method for inhibiting distortion and the like in drying, there is a method for drying a ceramic formed body having a honeycomb structure by using a drying jig having an upper jig and a lower jig equipped with pressure applying means, the applied pressure being preferably 0.4 to 0.6 MPa as disclosed in Japanese Patent Application Laid-open No. 2001-130973. There is a drying jig having two separate jigs formed in such a way that they enclose in a closely contacted state nearly the whole surface of sides parallel to a longitudinal direction of a ceramic formed body having a honeycomb structure as disclosed in Japanese Patent Application Laid-open No. 2001-19533. In these methods, though the distortion of the formed body can be inhibited, cells may be collapsed in some cases, which may result in cross sectional deformation of the formed body.

### DISCLOSURE OF THE INVENTION

The present invention has been made in view of such a situation and aims to provide a method of drying a honeycomb formed body in which distortion or cross sectional deformation of a honeycomb formed body can be reduced.

The present invention provides a method of drying a honeycomb formed body as set out in claim 1.

In the invention, the drying step preferably starts with a distance between the outer wall and the guide covering the outer wall of 0.1 to 1. 0 mm.

In the invention, it is preferred that the guide has an opening.

It is also preferred that the drying step includes a microwave drying step and a hot air drying step, and the hot air drying step is conducted after the microwave drying step. In this case, the drying preferably starts in a state where at least a part of the outer wall is covered with the guide at least in the hot air drying step, and also the drying preferably starts in a state where at least a part of the outer wall is covered with the guide at least in the microwave drying step. Additionally, in the microwave drying step, output of microwave per unit mass of the honeycomb formed body is preferably in the range of 0.5 to 3 kW/kg, and dewatering ratio relative to the total dewatering amount in the complete drying step is preferably in the range of 30 to 80% by mass. It is also preferred that the honeycomb formed body contains ceramics as a main component and the main component contains silicon carbide.

### BRIEF DESCRIPTION OF THE DRAWINGS

Fig. 1 is a schematic perspective view showing an embodiment of the honeycomb formed body to which the present invention is applied.
Fig. 2 is a schematic perspective view showing another embodiment of the honeycomb formed body to which the present invention is applied.
Fig. 3 is a schematic perspective view showing a honeycomb formed body placed on a mounting jig.
Fig. 4 is a schematic perspective view showing a honeycomb formed body in a method of the present invention covered with a guide.
Fig. 5 is a schematic perspective view showing a honeycomb formed body in a method of the present invention, covered with another type of the guide.
Fig. 6 is a schematic front view showing a honeycomb formed body in a method of the present invention, placed on another type of the mounting jig.
Fig. 7 is a schematic perspective view showing a honeycomb formed body in the method of the present invention of Fig. 6 covered with still another type of the guide.
Fig. 8(a), Fig. 8(b) and Fig. 8(c) are schematic front views showing a honeycomb formed body in comparative methods covered with another type of guide respectively.
Fig. 9 is a schematic perspective view showing a honeycomb formed body in a method of the present invention, covered with still another type of the guide.
Fig. 10 is a schematic side view showing a method for measuring distortion of a honeycomb formed body.

### BEST MODE FOR CARRYING OUT THE INVENTION

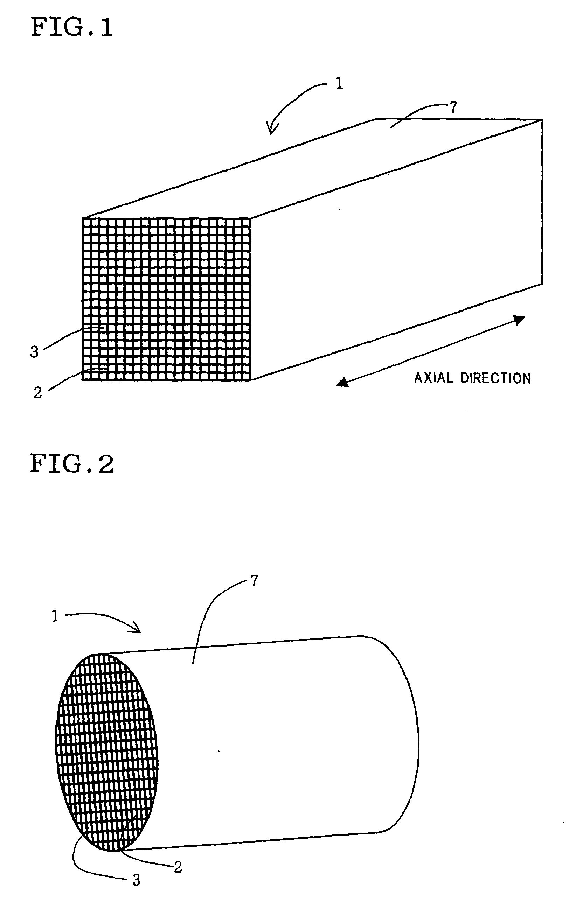

Methods of drying a honeycomb formed body according to the present invention are described below in detail with reference to the concrete embodiments. However, the present invention is not restricted to the following embodiments. Incidentally, in the present description, the expression "section" means a section perpendicular to the axial direction shown in Fig. 1, unless otherwise specified.

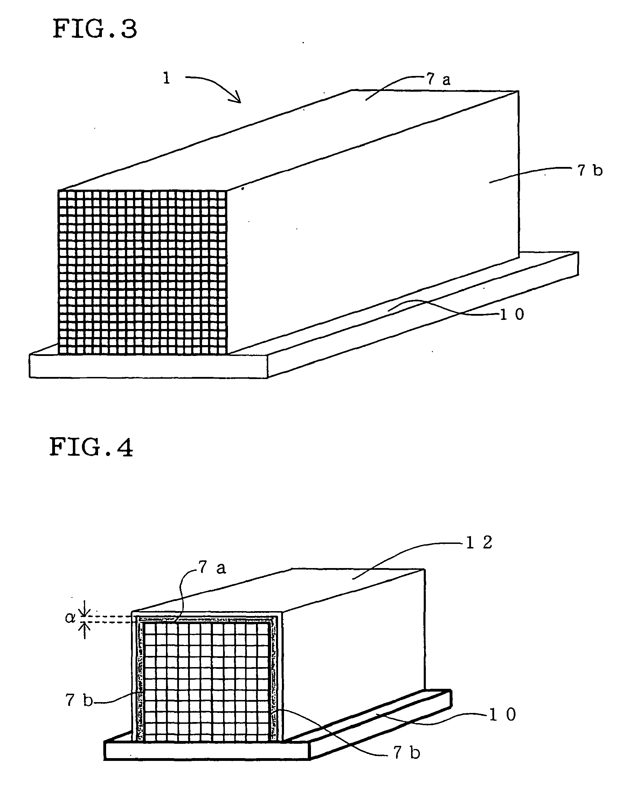

As shown in Fig. 1 or Fig. 2, for example, the honeycomb formed body comprises an outer wall 7, partition walls 2 disposed inside the outer wall 7 and a plurality of cells 3 surrounded by the partition walls 2 and extending in an axial direction of the honeycomb formed body. A significant feature of the first aspect is provision of the drying step which, in drying such a honeycomb formed body, starts drying in a state where at least a part of the outer walls 7a and 7b is covered with a guide 12 covering the outer wall so as not to come into contact with the outer wall, for example the outer wall 7a and/or 7b as shown in Fig. 3 and Fig. 4, namely in a state where the guide covers the outer wall at a certain distance.

By starting the drying step in such a state, it is possible to dry the honeycomb formed body while preventing it from being distorted without applying an excessive pressure. Therefore, it is possible to prevent occurrence of both the cross sectional deformation and the distortion of the honeycomb formed body.

If the distance between the outer wall and the guide, or a distance a between the outer wall 7a and the guide 12 as shown, for example, in Fig. 4 is too large, the effect of preventing distortion is difficult to be achieved, so that such distance is not preferable. Therefore, the distance a is 1.0 mm or less. On the other hand, if the distance a is too small, the effect of preventing cross sectional deformation of the honeycomb formed body is difficult to be achieved, so that such distance is not preferable. Therefore, the distance a is preferably 0.1 mm or more. Likewise, the distance between the outer wall 7b located on the lateral side and the guide is preferably in the range of 0.1 mm and 1.0 mm.

If these distances are 0.1 mm or less, the maximum pressure at the time the honeycomb formed body and the guide come into contact with each other during the drying step is desirably set to less than 0.2 MPa, preferably 0.05 MPa or less in order to prevent the sectional shape from deforming to some extent.

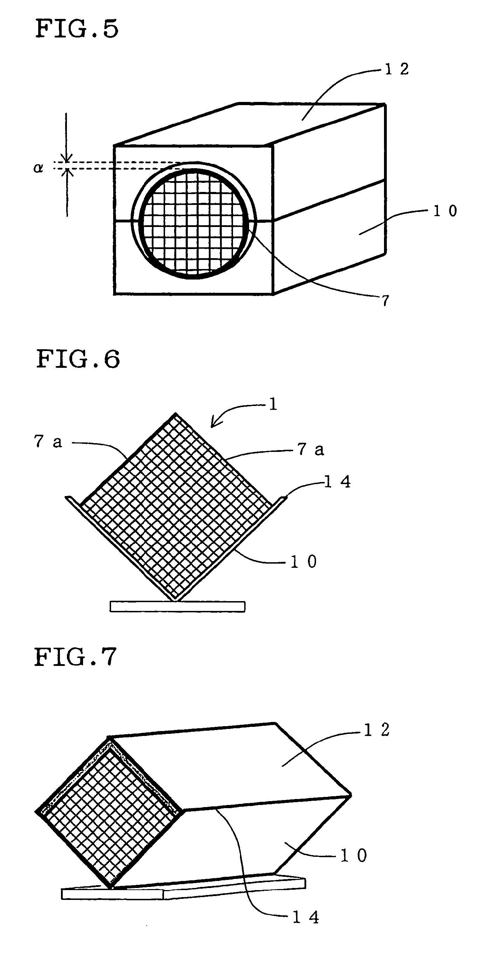

Fig. 5 shows another embodiment of the invention. Fig. 5 shows a preferred example when a honeycomb formed body of cylindrical shape is subjected to drying. The honeycomb formed body is placed on a mounting jig 10 having a recess of semi-cylindrical shape, and then the outer wall 7 is covered with a guide 12 having a recess portion of semi-cylindrical shape with a radius slightly larger than the sectional radius of the honeycomb formed body. In this manner, it is possible to cover the outer wall so that a part of the outer wall 7, namely, the outer wall located on the upper side does not come into contact with the guide 12.

Still another embodiment is shown in Fig. 6 and Fig. 7. In this case, a honeycomb formed body 1 of rectangular prism is received by a mounting jig 10 having a V-shaped cross section, and the outer wall 7a on the upper side of the honeycomb formed body is covered with a guide 12 having a V-shaped cross section which is formed by sides each being slightly larger than one side of the rectangular cross section of the honeycomb formed body 1. At this time, since the load of the guide 12 is received at or in the vicinity of an end face 14 of the mounting jig, the guide 12 and the upper outer wall 7a will not come into contact with each other.

In the above embodiments, although the honeycomb formed body is surrounded by the combination of the mounting jig and the guide, the mounting jig is not an essential element, and the embodiment shown in Fig. 3 may lack the mounting jig, for example. In the embodiment shown in Fig. 5 or Fig. 7, the mounting jig and the guide may be integrally formed. In such a case, the outer wall on the lower side of the honeycomb formed body comes into contact with the lower part of the guide because the honeycomb formed body is placed in the integrated guide, however, the effect of the present invention can be achieved because the part being in no contact is positioned upside.

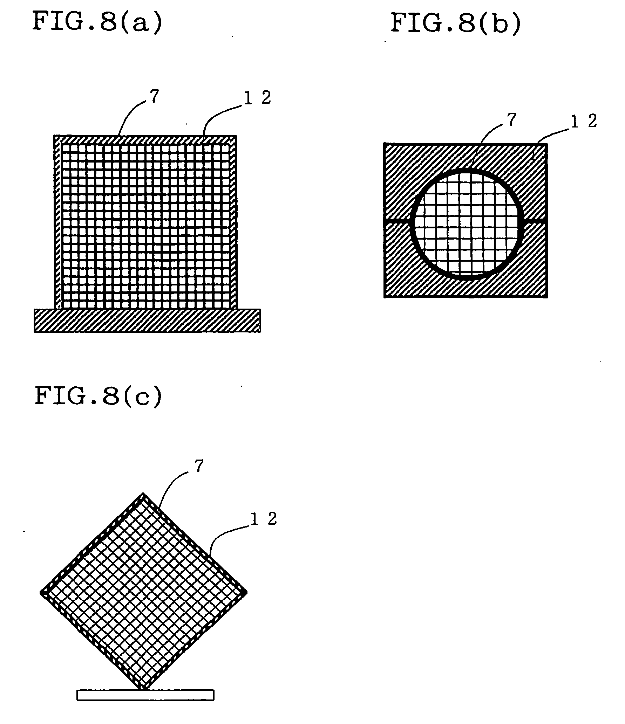

Next, a comparative method will be explained. The honeycomb formed body is similar to that described above. A significant feature of comparative method is the drying step which starts drying in a state where at least a part of outer wall of the honeycomb formed body is covered with a guide 12 in such a manner that the guide is in contact with at least a part of outer wall 7, as shown in Figs. 8(a) to 8(c), for example, wherein the pressure applied by the guide 12 on the outer wall 7 at the contact portion is less than 0.2 MPa, preferably 0.05 MPa or less in the drying step.

If the drying is conducted in a state where the guide and the outer wall are in contact with each other and that a generally-used pressure, such as pressures of 0.2 MPa or more is applied on the outer wall by the guide, the sectional shape of the honeycomb formed body deforms although distortion is prevented. However, by setting the pressure applied during the drying less than 0.2 MPa, preferably 0.05 MPa or less, it is possible to prevent the sectional shape from deforming to some extent, while preventing the distortion.

In this comparative method, all the surface that the guide covers is not necessarily in contact with the outer wall, and as shown in Fig. 8(a), for example, when the outer wall located on the upper side is in contact with the guide, the outer wall located on the lateral side may not be in contact with the guide 12. In this case, the distance is preferably in the range of 0.1 to 1.0 mm.

In this comparative method, the way of applying pressure is not particularly limited, and examples of the pressure application method include applying a load downward from above the guide, applying pressure by guide's own weight, and applying pressure from lateral side by pressure applying means in the embodiment as shown in Fig. 8(a).

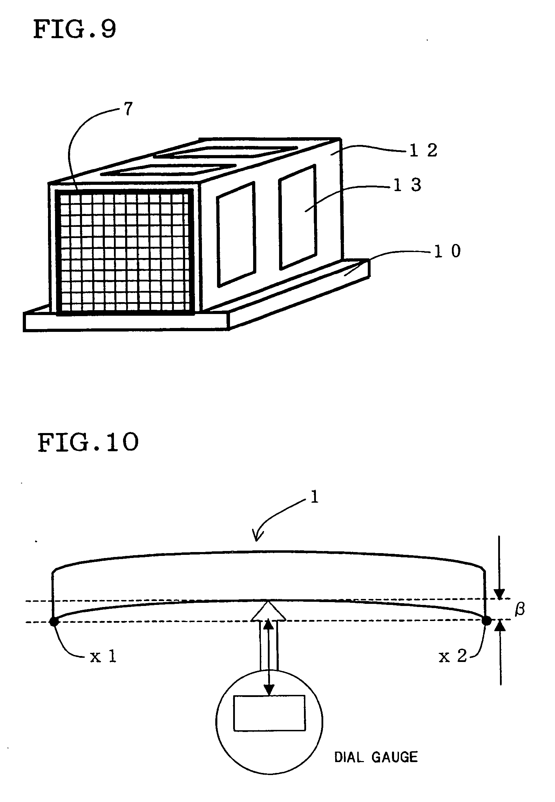

In the invention, it is also preferred to cover the outer wall 7 using a guide 12 having an opening 13 as shown in Fig. 9, for example. By employing such a configuration, it is possible to improve the evaporation efficiency of moisture of the honeycomb formed body and improve the drying efficiency. In this case, the shape and the position of the opening are not particularly limited. Preferably, the opening of larger size is desired from the view point of the drying efficiency. However, if the opening is too large, the extent of the outer wall covered with the guide becomes too small to make the present invention difficult to give the effect. Therefore, the opening area of the opening is 80% or less, more preferably 70% or less and still preferably 60% or less, relative to the area of the guide including the opening.

Likewise, from the view point of suppressing the distortion, the extent of the outer wall covered with the guide is preferably in the range of 20 to 100%, more preferably in the range of 30 to 100%, and still preferably in the range of 40 to 100%, relative to the surface area of the entire surface of the outer wall. From the view point of realizing suppression of distortion and improvement of drying efficiency, the extent is preferably in the range of 20 to 90%, more preferably in the range of 30 to 80%, and still preferably in the range of 40 to 70%. Therefore, in the case of providing an opening, it is preferred to provide the opening so as to satisfy the above ranges. Herein the expression "extent of the outer wall covered with the guide" means the extent excluding the opening if exists.

The drying means in the invention is not particularly limited, however, microwave drying and/or hot air drying is preferably used. The microwave drying has an advantage of executing rapid drying, however, the drying cannot be completed by the microwave drying in some cases. Therefore, it is preferred to combine the microwave drying and the hot air drying. Also preferred is conducting the hot air drying after removing moisture to some extent by conducting the microwave drying.

In the case where the hot air drying is conducted after the microwave drying, it is preferred that the drying is started in a state where at least a part of the outer wall is covered with the guide according to the first aspect or the second aspect of the present invention in either the microwave drying step or the hot air drying step. It is more preferred that the guide is used in the microwave drying step. It is especially preferred that the drying is started in a state where at least a part of the outer wall is covered with the guide in both of the drying steps.

The output of microwave in the microwave drying step is not particularly limited, however it is preferably in the range of about 0.5 to 3 kW/kg. If the output of microwave is too low, longer drying time is required to possibly cause collapse by the own weight. On the other hand, if the output of microwave is too high, a problem may occur that the binder starts burning. From the view point of preventing occurrence of distortion, it is also preferred that 30 to 80% by mass of the total dewatering amount, preferably 30 to 60% by mass of the total dewatering amount is dewatered in the microwave drying step, and the remaining moisture is dewatered in the hot air drying step. Also, it is preferred to use ventilating type or hot air circulating type hot air drying means

The honeycomb formed body to which the invention is applied preferably contains ceramics as a main component in the case of using the honeycomb formed body as various kinds of filters and carries. It is especially preferred that the main component contains silicon carbide from the view point of heat resistance or the like in the case where the honeycomb formed body is used as DPF or the like.

The present invention will concretely be described hereinafter in terms of examples. However the present invention is not limited to these examples.

### (Production of honeycomb formed body)

As a raw material, a mixed powder containing 80% by mass of SiC powder and 20% by mass of metal Si powder was prepared. To the powder, methyl cellulose, hydroxypropoxyl methyl cellulose, surfactant, and water were added to prepare kneaded clay having plasticity. This kneaded clay was extruded to form a honeycomb formed body A of rectangular prism as shown in Fig. 1 having a sectional shape of square 40 mm on a side and a length of 400 mm, and a honeycomb formed body B of cylindrical shape as shown in Fig. 2 having a diameter of 50 mm and a length of 400 mm.

### (Example 1 - comparative)

The honeycomb formed body B was set into the mounting jig and the guide as shown in Fig. 8(b) having no space with the outer wall of the honeycomb formed body B. That is, the outer wall of the honeycomb formed body B was covered with the mounting jig and the guide that covers the outer wall such that the outer wall and the guide come into direct contact. After applying pressure on the honeycomb formed body B by applying a load downward from above the guide at pressures listed in Table 1, microwave drying was conducted, followed by hot air drying to the complete dried state. Then, the honeycomb formed body was taken out and a difference between the maximum diameter and the minimum diameter of the end face was measured for checking deformation of the sectional shape, and the resultant values are shown in Table 1 as a tolerance of product profile.

### (Examples 2 and 3 - comparative)

Using the honeycomb formed body A, the test similar to Example 1 was conducted except that the mounting jig and the guide as shown in Fig. 8(a) were used in Example 2 and the mounting jig and the guide as shown in Fig. 8(c) were used in Example 3. The results are shown in Table 1

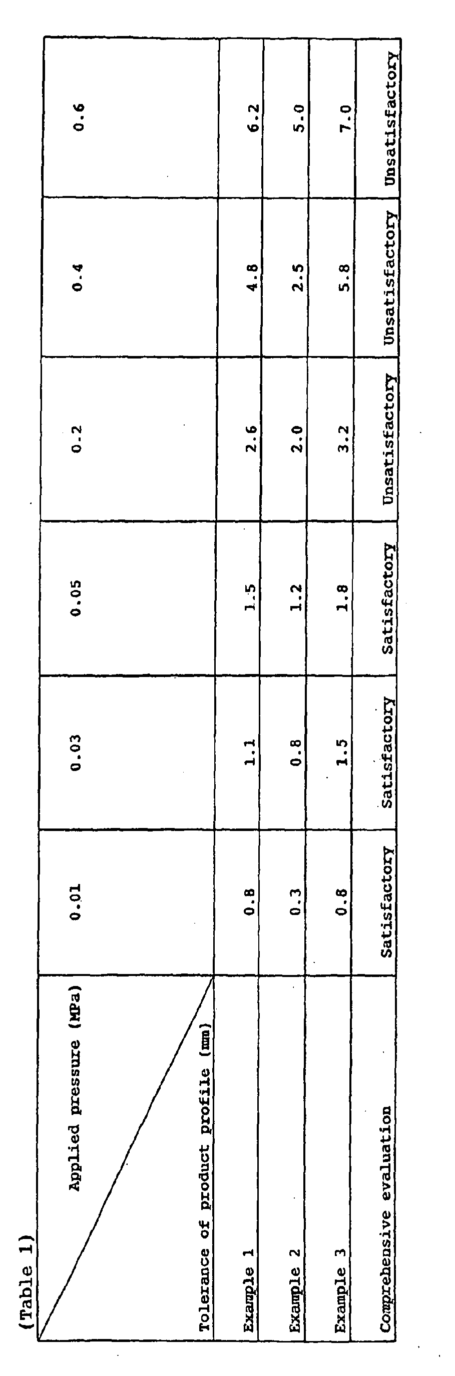

Reviewing the results of Examples 1 to 3 in Table 1 comprehensively, the honeycomb formed body collapsed and the sectional shape was largely deformed near the part where the outer wall was in contact with the guide when the applied pressure was 0.2 MPa or more. On the other hand, when the applied pressure was 0.05 MPa or less, the deformation was not so significant.

### (Example 4)

Using the honeycomb formed body B, the drying was conducted in the drying condition similar to that of Example 1 while using the mounting jig and the guide as shown in Fig. 5 and changing the space a between the guide and the outer wall from 0.2 to 3.0 mm as shown in Table 3. Then, the distortion amount B of each honeycomb formed body was measured. As shown in Fig. 10, the distortion amount β was determined using a dial gauge by placing the honeycomb formed body on a specific jig, and measuring the difference between the average of vertical positions at two points x1 and x2 located at ends of the longitudinal direction and the vertical position of the outer wall in the mid point of these two points. The results are shown in Table 2. At a distance a in the range of 0.2 to 1.0 mm, the distortion amount was small and allowable, however, at a distance a of 1.5 mm or more, the distortion amount was large and exceeded the allowable range.

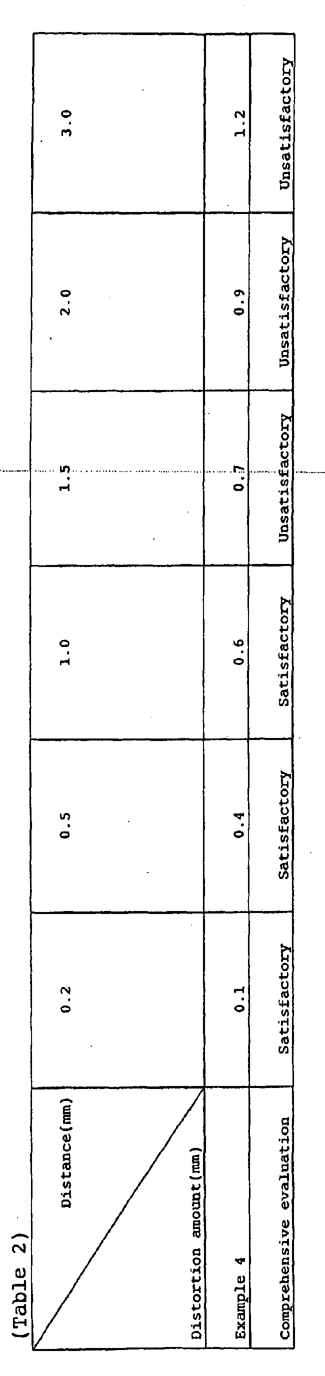

### (Example 5)

The honeycomb formed body A was placed on the mounting jig 10 and covered with the guide 12 having the opening 13 as shown in Fig. 9 so that the guide was disposed at a distance of 0.5 mm from the outer wall. The opening area of the opening 13 was varied at 60%, 30% and 0% (i.e. no opening) relative to the area of the guide including the opening 13, and a sample not covered with the guide was also prepared. These samples were subjected to microwave drying for 160 seconds at an output of 2.0 kW/kg, followed by hot air drying at 120° C for 20 minutes. From the relation between the drying time and the moisture evaporation ratio, a relative moisture evaporation rate was determined relative to the moisture evaporation rate obtained by the sample not having the guide. The distortion amount of the honeycomb formed body was also determined. The results shown in Table 4 demonstrate that the distortion amount is reduced by the guide, and the moisture evaporation rate is increased by providing an opening in the guide and reducing the area of the guide covering the outer wall.

**(Table 3)**

| | | | | | |
|---|---|---|---|---|---|
| Example 5 | Opening ratio of guide (%) | No guide | 60 | 30 | 0 |
| | Relative moisture evaporation rate | 1.00 | 0.95 | 0.90 | 0.85 |
| | Distortion amount (mm) | 2.0 | 0.5 | 0.4 | 0.5 |
| | Comprehensive evaluation | Unsatisfactory | Satisfactory | Satisfactory | satisfactory |

### (Example 6)

The honeycomb formed body B was dried by microwave at an output of 3 kW/kg without using the guide. By varying the drying time, honeycomb formed bodies having moisture evaporation ratios of 0% which was not subjected to the microwave drying, to 80% were obtained. Then these honeycomb formed bodies were set between the mounting jig and the guide having the shapes as shown in Fig. 5 at a distance a between the guide and the outer wall of 0.5 mm, and subjected to hot air drying under the condition of 120°C and wind speed of 5 m/sec. After the remaining moisture was evaporated, distortion amounts of these honeycomb formed bodies were measured. The results are shown in Table 4.

### (Examples 7 and 8)

The test similar to Example 6 was conducted except that the mounting jig and the guide as shown in Fig. 4 were used in Example 7 and the mounting jig and the guide as shown in Fig. 7 were used in Example 8. The results are shown in Table 4.

Table 4 shows the existence of an optimum range in the moisture evaporation ratio accomplished by microwave where the distortion amount is very small compared to the case where the moisture evaporation ratio is too high or too low.

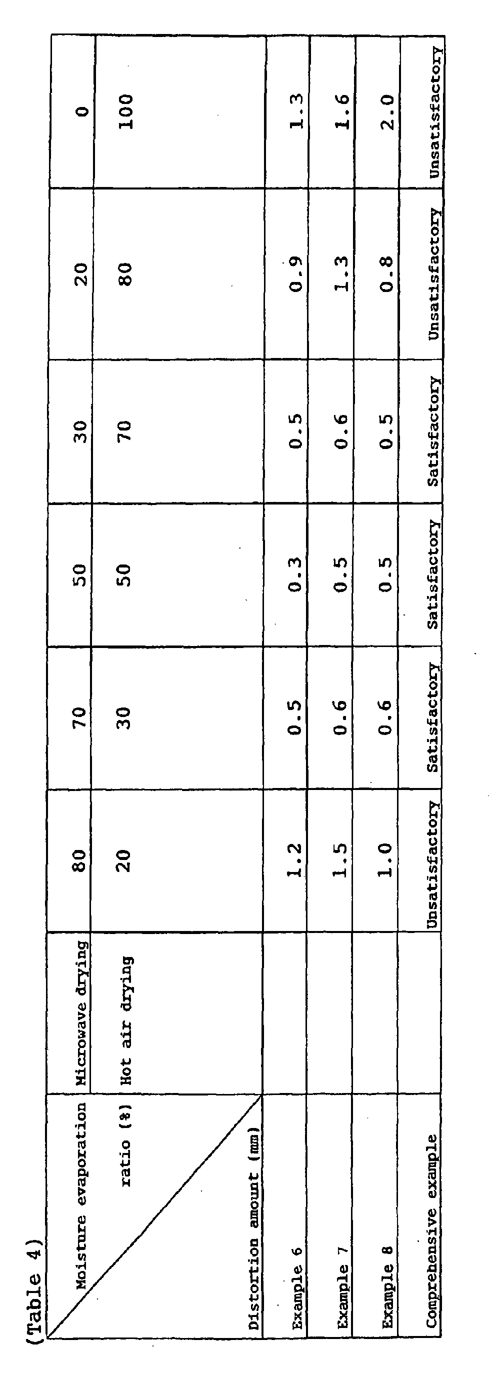

### INDUSTRIAL APPLICABILITY

As described above, by using the drying method of the honeycomb formed body according to the invention, it was possible to avoid both distortion and cross sectional deformation during the drying. Therefore, the present invention can be advantageously used for drying a honeycomb formed body.

## Claims

1. A method of drying a honeycomb formed body (1) comprising an outer wall (7), partition walls (2) disposed inside the outer wall, and cells (3) surrounded by the partition walls and extending in an axial direction of the honeycomb formed body (11),
wherein the method comprises a drying step starting in a state of covering at least a part of the outer wall (7) with a guide (12) which covers the outer wall and contacts the outer wall underneath the honeycomb formed body to support it, the guide (12) extending all around the honeycomb body so as to extend over the sides and top thereof, the extent that the guide (12) covers the outer wall (7) being in the range 20 to 100% relative to the surface area of the entire outer wall (7),
pressure from the guide (12) to the outer wall (7) being less than 0.2 MPa at a part where the guide (12) comes into contact with the outer wall in the drying step,
**characterised in that** at starting of said drying step the guide (12) is not in contact the outer wall (7) of the honeycomb formed body (1) but is separated therefrom by a gap except where the honeycomb formed body (1) is supported, the drying step starting with the maximum gap between the honeycomb formed body (1) and the guide (12) being 1.0 mm

2. The method of drying a honeycomb formed body according to claim 1, wherein the guide (12) has at least one opening (13).

3. The method of drying a honeycomb formed body according to claim 1 or 2, wherein the drying includes a microwave drying step and a hot air drying step, and the hot air drying step is conducted after the microwave drying step.

4. The method of drying a honeycomb formed body according to claim 3, wherein at least in the hot air drying step, drying is started in a state where at least a part of the outer wall (7) is covered with the guide (12).

5. The method of drying a honeycomb formed body according to claim 3 or 4, wherein at least in the microwave drying step, drying is started in a state where at least a part of the outer wall (7) is covered with the guide (12).

6. The method of drying a honeycomb formed body according to any one of claims 3 to 5, wherein in the microwave drying step, microwave output per unit mass of the honeycomb formed body (1) is in the range of 0.5 to 3 kW/kg.

7. The method of drying a honeycomb formed body according to any one of claims 3 to 6, wherein dewatering ratio in the microwave drying step is 30 to 80% by mass, relative to the total dewatering amount in the complete drying step.

8. The method of drying a honeycomb formed body according to any of claims 1 to 7, wherein the honeycomb formed body (1) contains ceramics as a main component.

9. The method of drying a honeycomb formed body according to claim 8, wherein the main component contains silicon carbide.

## Patentansprüche

1. Verfahren zum Trocknen eines Wabenformkörpers (1), der eine Außenwand (7), innerhalb der Außenwand angeordnete Trennwände (2) und durch die Trennwände umgebene Zellen (3) umfasst, die sich In eine axiale Richtung des Wabenformkörpers (11) erstrecken,
wobei das Verfahren einen Schritt des Trocknens umfasst, der damit beginnt, dass zumindest ein Teil der Außenwand (7) mit einer Führung (12) bedeckt wird, die die Außenwand bedeckt und die Außenwand unterhalb des Wabenformkörpers berührt, um diese zu stützen, wobei sich die Führung (12) um den gesamten Wabenkörper herum erstreckt, um sich über dessen Seiten und Oberseite zu erstrecken, wobei das Ausmaß, In dem die Führung (12) die Außenwand (7) bedeckt, Im Bereich von 20 bis 100 % bezogen auf die Oberfläche der gesamten Außenwand (7) bedeckt, und wobei
der von der Führung (12) auf die Außenwand (7) einwirkende Druck an einem Teil, an dem die Führung (12) die Außenwand in dem Trocknungsschritt berührt, weniger als 0,2 MPa beträgt,
**dadurch gekennzeichnet, dass** zu Beginn des Trocknungsschritts die Führung (12) die Aul3enwand (7) des Wabenformkörpers (1) nicht berührt, sondern von dieser mit Ausnahme der Stellen, an denen der Wabenformkörper (1) gestützt wird, durch einen Spalt getrennt ist, wobei zu Beginn des Trocknungsschritts der Spalt zwischen dem Wabenformkörper (1) und der Führung (12) maximal 1,0 mm beträgt.

2. Verfahren zum Trocknen eines Wabenformkörpers nach Anspruch 1, worin die Führung (12) zumindest eine Öffnung (13) aufweist.

3. Verfahren zum Trocknen eines Wabenformkörpers nach Anspruch 1 oder 2, worin das Trocknen einen Schritt des Mikrawellentrocknans und einen Schritt des Heifslufttrocknens umfasst, wobei der Heißlufttrocknungsschritt nach dem Mikrowellentrocknungsschritt durchgeführt wird.

4. Verfahren zum Trocknen eines Wabenformkörpers nach Anspruch 3, worin zumindest bei dem Heißlufttroaknungsschritt das Trocknen in einem Zustand beginnt, in dem zumindest ein Teil der Außenwand (7) mit der Führung (12) bedeckt ist.

5. Verfahren zum Trocknen eines Wabenformkörpers nach Anspruch 3 oder 4, worin zumindest bei dem Mlkrowellentrocknungsschritt das Trocknen in einem Zustand beginnt, in dem zumindest ein Teil der Außenwand (7) mit der Führung (12) bedeckt ist.

6. Verfahren zum Trocknen eines Wabenformkörpers nach einem der Ansprüche 3 bis 5, worin bei dem Mikrowellentrocknungsschritt die Mikrowellenleistung pro Einheit Masse des Wabanformkärpers (1) Im Bereich von 0,5 bis 3 kW/kg liegt.

7. Verfahren zum Trocknen eines Wabenformkörpers nach einem der Ansprüche 3 bis 6, worin das Entwässerungsverhältnis bei dem Mikrowellentrocknungsschritt bezogen auf die gesamte Entwässerungsmenge in dem gesamten Trocknungsschritt 30 bis 80 Masseprozent beträgt.

8. Verfahren zum Trocknen eines Wabenformkörpers nach einem der Ansprüche 1 bis 7, worin der Wabenformkörper (1) als Hauptkomponente Keramikmaterlallen enthält.

9. Verfahren zum Trocknen eines Wabenformkörpers nach Anspruch 8, worin die Hauptkomponente Siliciumcarbid enthält.

## Revendications

1. Procédé de séchage d'un corps formé en nid d'abeilles (1) comprenant une paroi extérieure (7), des parois de séparation (2) disposées à l'intérieur de la paroi extérieure et des alvéoles (3) entourées par les parois de séparation et s'étendant dans une direction axiale du corps formé en nid d'abeilles (11),
où le procédé comprend une étape de séchage commençant dans un état couvrant au moins une partie de la paroi extérieure (7) avec un guide (12) qui couvre la paroi extérieure et vient en contact avec la paroi extérieure en dessous du corps formé en nid d'abeilles pour le supporter, le guide (12) s'étendant tout autour du corps en nid d'abeilles de manière à s'étendre sur les côtés eL le dessus de celui-ci, l'étendue selon laquelle le guide (12) couvre la paroi extérieure (7) étant dans la plage de 20 à 100 % relativement à l'aire de surface de toute la paroi extérieure (7),
la pression du guide (12) à la paroi extérieure (7) étant inférieure à 0,2 MPa à une partie où le guide (12) vient en contact avec la paroi extérieure à l'étape de séchage,
**caractérisé en ce qu'**au début de ladite étampe de séchage, le guide (12) n'est pas en contact avec la paroi extérieure (7) du corps formé en nid d'abeilles (1) mais est séparé de celle-ci selon un espace excepté où le corps formé en nid d'abeilles (1) est supporté, l'étape de séchage commençant, l'espace maximum entre le corps formé en nid d'abeilles (1) et le guide (12) étant de 1,0 mm.

2. Procédé de séchage d'un corps formé en nid d'abeilles selon la revendication 1, dans lequel le guide (12) présente au moins une ouverture (13).

3. Procédé de séchage d'un corps formé en nid d'abeilles selon l'une des revendications 1 ou 2, dans lequel le séchage comprend une étape de séchage au micro-ondes et une étape de séchage à air chaud, et l'étape de séchage à air chaud est exécutée après l'étape de séchage aux micro-ondes.

4. Procédé de séchage d'un corps formé en nid d'abeilles selon la revendication 3, où au moins à l'étape de séchage à air chaud, le séchage commence dans un état où au moins une partie de la paroi extérieure (7) est couverte par le guide (12).

5. Procédé de séchage d'un corps formé en nid d'abeilles selon la revendication 3 ou 4, où au moins à l'étape de séchage aux micro-ondes, le séchage commence dans un état où au moins une partie de la paroi extérieure (7) est couverte avec le guide (12).

6. Procédé de séchage d'un corps formé en nid d'abeilles selon l'une quelconque des revendications 3 à 5, dans lequel à l'étape de séchage aux micro-ondes, la sortie de micro-ondes par masse unitaire de corps tourné en nid d'abeilles (1) est dans la plage de 0,5 à 3 kW/kg.

7. Procédé de séchage d'un corps formé en nid d'abeilles selon l'une quelconque des revendications 3 à 6, dans lequel le rapport de la déshydratation à l'étape de séchage aux micro-ondes est de 30 à 80% en masse, relativement à la quantité de déshydratation totale à l'étape de séchage complète.

8. Procédé de séchage d'un corps formé en nid d'abeilles selon l'une quelconque des revendications 1 à 7, dans lequel le corps formé en nid d'abeilles (1) contient de la céramique comme composant principal.

9. Procédé de séchage d'un corps formé en nid d'abeilles selon la revendication 8, dans lequel le composant principal contient du carbure de silicium.
